# EUROPÄISCHE PATENTSCHRIFT

(11) **EP 3 864 341 B1**
(45) Veröffentlichungstag und Bekanntmachung des Hinweises auf die Patenterteilung: **12.04.2023**
(21) Anmeldenummer: 19786319.4
(22) Anmeldetag: 08.10.2019
(51) Int. Cl.: F21S 41/143, F21S 41/265, F21S 41/43, F21S 41/47, F21S 41/275, G02B 3/00, G02B 19/00

(54) **ABBLENDLICHTSCHEINWERFER**
LOW-BEAM HEADLIGHT
PHARE À FEU DE CROISEMENT

(30) Priorität: 09.10.2018 DE 102018217215
(43) Veröffentlichungstag der Anmeldung: 18.08.2021
(73) Patentinhaber: Fraunhofer-Gesellschaft zur Förderung der angewandten Forschung e.V., 80686 München (DE)
(72) Erfinder: SCHREIBER, Peter, 07745 Jena (DE); LI, Chen, 07745 Jena (DE); MICHAELIS, Dirk, 07745 Jena (DE); WÄCHTER, Christoph, 07745 Jena (DE); FISCHER, Stephanie, 07745 Jena (DE)
(74) Vertreter: Schenk, Markus
(86) Internationale Anmeldenummer: PCT/EP2019/077238
(87) Internationale Veröffentlichungsnummer: WO 2020/074523

(56) Entgegenhaltungen:
- WO-A1-2017/066817
- JP-A- 2014 041 802
- US-A1- 2009 262 546
- US-A1- 2015 241 009
- US-A1- 2015 252 975
- US-A1- 2017 241 606

## Beschreibung

Die vorliegende Erfindung bezieht sich auf einen Abblendlichtscheinwerfer bzw. ein Abblendlicht für Kraftfahrzeuge.

Wesentliche Merkmale der Winkelverteilung der Lichtstärke eines Abblendlichts für Kraftfahrzeuge sind eine in horizontaler Richtung annähernd symmetrische Verteilung mit einer Halbwertsbreite von ca. 8...10° und eine asymmetrische vertikale Verteilung mit einer Halbwertsbreite von ca. 2...3° mit einer nach oben scharfen Hell-Dunkelgrenze mit hohem Kontrast zur Vermeidung der Blendung entgegenkommender Fahrzeuge.

Die Hell-Dunkelgrenze bildet bei Rechtsverkehr in Fahrtrichtung links eine Horizontale bei einer vertikalen Höhe von ca. - 0.6°. Rechts zur Fahrtrichtung wird die Grenze nach oben verschoben um z.B. Verkehrsschilder besser auszuleuchten. Häufig wird auch rechts eine waagerechte Hell-Dunkelgrenze angestrebt. Die Region, in der die Grenze verschoben wird, wird als Ellenbogen bezeichnet und befindet sich im zentralen Bereich der Abstrahlung in Fahrtrichtung. Die Erzeugung dieser komplexen Intensitätsverteilung erfordert große Scheinwerfersysteme mit vergleichsweise geringer Transmission.

In herkömmlichen Abblendscheinwerfern wird eine der Hell-Dunkelgrenze entsprechend geformte Blende von einer strahlgeformten Lichtquelle (üblicherweise LED oder Halogenleuchte) beleuchtet und dann durch eine Projektionsoptik nach Unendlich auf die Fahrbahn abgebildet. Um die geforderten geringen Divergenzen zu erreichen, versucht man möglichst kleine Blendenabmaße zu erzielen, wodurch eine entsprechend geringe Brennweite der Projektionsoptik ermöglicht wird. Bei der Verringerung der Abmaße ist man aber durch die verfügbare Luminanz der Lichtquellen und geforderte Mindestlichtstärke des Scheinwerfers begrenzt.

Um geringe Abmaße zu erzielen werden Lichtquellen mit hoher Luminanz (z.B. LEDs) mit hocheffizienten Strahlformungsoptiken mit Freiformreflektoren und -linsen zur Erzielung einer hohen Transmission kombiniert. Die resultierenden Systeme haben dennoch in Lichtausbreitungsrichtung eine Ausdehnung von deutlich über 10cm.

Ein alternativer Ansatz unter Nutzung von Linsenarrays wurde in [1] offengelegt: Als Lichtquelle dienen mehrere individuell kollimierte LEDs, die ein Kondensor-Mikrolinsenarray, gefolgt von einem Blendenarray und einem Projektionslinsenarray beleuchten. Durch den Übergang von der konventionellen Einzelaperturoptik zu einer Multiaperturoptik kann die Brennweite der Projektionsoptik und damit die Baulänge des Scheinwerfers stark verkürzt werden. Durch das Blendenarray wird aber die Transmission des Systems verringert. Weiter befinden sich die Blenden in der Nähe einer Zwischenbildebene des Beleuchtungsstrahlengangs, was hohe Energiedichten auf den absorbierenden Blenden und somit einen merklichen Wärmeeintrag in das mikrooptische System bedingt.

Die WO 2017/066817 A1 zeigt einen weiteren Ansatz für ein Lichtmodul mit einem Mikrolinsenarray. Das Lichtmodul beinhaltet eine Lichtquelle, und eine Vorsatzoptikeinrichtung, welche das Licht der Lichtquelle im Wesentlichen parallel richtet, bevor es auf eine Projektionseinrichtung trifft, welche das Mikrolinsenarray aufweist.

Die US 2009/0262546 A1 zeigt einen Scheinwerfer mit einer Reihe von Lichtmodulen. Jedes der Lichtmodule weist eine Lichtquelle, eine Kondensorlinse, sowie eine erste Linsenanordnung und eine zweite Linsenanordnung auf, die jeweils drei Linsensegmente aufweisen. Das Licht aus der Lichtquelle wird mittels der Kondensorlinse auf die erste Linsenanordnung projiziert und von dieser auf die zweite Linsenanordnung, so dass ein von dem oberen Linsensegment der ersten Linsenanordnung erzeugtes Lichtbündel auf das obere Linsensegment der zweiten Linsenanordnung trifft, ein von dem mittleren Linsensegment der ersten Linsenanordnung erzeugtes Lichtbündel auf das mittlere Linsensegment der zweiten Linsenanordnung trifft, und ein von dem unteren Linsensegment der ersten Linsenanordnung erzeugtes Lichtbündel auf das untere Linsensegment der zweiten Linsenanordnung trifft.

Die US 2015/0252975 A1 zeigt einen Scheinwerfer mit einer Vielzahl lichtemittierender Elemente. Eine Projektionslinse mit einer Vielzahl von Projektionsregionen ist vor den lichtemittierenden Elementen angeordnet. Die Projektionsregionen sind gegenüber den jeweiligen lichtemittierenden Elementen angeordnet und projizieren das Licht der jeweiligen lichtemittierenden Elemente die gegenüber den jeweiligen Projektionsregionen angeordnet sind.

Die JP 2014 041802 A zeigt einen Scheinwerfer mit zwei nebeneinander angeordneten Lichtquellen, zwei Reflektoren, einer in eine Vielzahl von Regionen unterteilte Linse, und einer Blende. Ein erster Linsenteil wird vom Licht des ersten Reflektors durchleuchtet wird, während ein zweiter Linsenteil vom Licht des zweiten Reflektors durchleuchtet wird. Dabei ist eine Blende vorgesehen, welches Licht des ersten Reflektors beziehungsweise der ersten Lichtquelle davon abhält, den zweiten Linsenteil zu durchleuchten.

Die US 2017/0241606 A1 zeigt ein Lichtprojektionsmodul mit einer Matrix aus Lichtquellen und einem ersten Optiksystem um das Licht der Lichtquellen zu projizieren. Das erste Optiksystem hat eine Vielzahl konvergierender Optiken, von denen vorteilhafterweise jeweils eine nach jeweils einer der Lichtquellen angeordnet ist.

Es besteht demnach der Wunsch nach einem Konzept für ein Abblendlicht, das es ermöglicht, geringe Baulängen zu erreichen, und dabei aber dennoch eine effektive Energieausnutzung zu erzielen.

Die Aufgabe der vorliegenden Erfindung besteht deshalb darin, ein Abblendlicht bzw. einen Abblendlichtscheinwerfer zu schaffen, das bzw. der die Erzielung geringer Baulängen bei hoher Licht-/Energieausbeute ermöglicht. Diese Aufgabe wird durch den Gegenstand des unabhängigen Patentanspruchs gelöst.

Die vorliegende Erfindung basiert auf der Idee, dass ein Abblendlichtscheinwerfer mit einer geringen Baulänge und einer hohen Licht-/Energieausbeute erzielt werden kann, indem eine Lichtquellenanordnung vorgesehen ist, die einen Lichtkegel aus Licht erzeugt, das in einer ersten Transversalrichtung weniger divergent ist als in einer zu der ersten Transversalrichtung senkrechten zweiten Transversalrichtung, und diese Lichtquellenanordnung zur Ausleuchtung von drei entlang der zweiten Transversalrichtung nebeneinander angeordneten Linsenarrays verwendet wird, die somit eingangsseitig jeweils von einem zugeordneten unter in der zweiten Transversalrichtung nebeneinander angeordneten Segmenten des Lichtkegels durchstrahlt werden und ausgangsseitig Abblendlicht mit einer gegenüber dem Lichtkegel veränderten Lichtstärkewinkelverteilung ausgeben. Innerhalb der Lichtquellenanordnung verwendete Optiken können somit als Ein-Linsen-Optiken ausgebildet werden, d. h. jede Linse bzw. Optik darin wird jeweils von dem gesamten zum Abblendlicht beitragenden Licht durchstrahlt. Sie ist somit auch kostengünstig und nicht nur in kurzer Baulänge bereitstellbar. Außerdem übernimmt die Lichtquellenanordnung bereits eine der Strahlformungsaufgaben durch die unterschiedliche Divergenz in den zwei Transversalrichtungen. Die Divergenz in der zweiten Transversalrichtung übernimmt gemäß Ausführungsbeispielen der vorliegenden Anmeldung beispielsweise die Definition des horizontalen Öffnungswinkels des Abblendlichtes. Die unterschiedliche Divergenzvorbereitung durch die Lichtquellenanordnung wird dann in den Linsenarrays ausgenutzt, um spezifisch für jeweilige Abschnitte des Abblendlichts die unterschiedliche Divergenz in den Transversalrichtungen effektiv auszunutzen und die gewünschte Abstrahlung zu erzielen.

Gemäß Ausführungsbeispielen sind beispielsweise die beiden äußeren Linsenarrays als Zylinderlinsenarrays ausgebildet, so dass dieselben lediglich die Aufgabe der Strahlformung in der ersten Transversalrichtung übernehmen, während der durch diese Linsenarrays ausgeleuchtete Abschnitt des Abblendlichts jeweils einer geradlinigen Verlängerung des dieselben durchstrahlenden Segmentes des Lichtkegels der Lichtquellenanordnung entspricht. Insbesondere können die beiden äußeren Linsenarrays als Wabenkondensor mit eintrittsseitigen und austrittsseitigen zylindrischen Wabenlinsen ausgebildet sein. Die Linsenarrays nutzen somit die Vordivergenzreduktion durch die Lichtquellenanordnung aus. Ein gegenseitiger Versatz einer Anordnung der eintrittsseitigen Wabenlinsen gegenüber den austrittsseitigen Wabenlinsen in der ersten Transversalrichtung kann für das erste und das dritte Linsenarray hinsichtlich Anordnung von Linsenöffnung und/oder Linsenscheitel unterschiedlich sein, so dass eine Änderung der Lichtstärkewinkelverteilung des das erste Linsenarray durchstrahlenden Segmentes des Lichtkegels in der ersten Transversalrichtung durch das erste Linsenarray gegenüber einer Änderung der Lichtstärkeverteilung des das dritte Linsenarray durchstrahlenden Segmentes des Lichtkegels in der ersten Transversalrichtung durch das dritte Linsenarray unterschiedlich ist. Insbesondere können die beiden Linsenarrays in den beiden in der zweiten Transversalrichtung äußeren Abschnitten des Abblendlichtes Hell-Dunkel-Kanten erzeugen, die in unterschiedlichen Lagen entlang der zweiten Transversalrichtung liegen, d. h. die beiden waagrechten Kanten, von denen die eine für den Gegenverkehr niedriger positioniert ist als die auf der anderen Seite.

Erfindungsgemäß wird das sich um den in der zweiten Transversalrichtung mittleren Abschnitt des Abblendlichts kümmernde zweite bzw. mittlere Linsenarray als Wabenkondensor mit eintrittsseitigen und austrittsseitigen Wabenlinsen ausgebildet.

Sein Inter-Wabenlinsen-Abstand in der zweiten Transversalrichtung ist für die austrittsseitigen Wabenlinsen größer als für die eintrittsseitigen Wabenlinsen. Die Vergrößerung kann der höheren Divergenz des Lichts des Lichtkegels von der Lichtquellenanordnung entlang der zweiten Transversalrichtung entsprechen. Dieser Wabenkondensor kann zur Ausbildung des Ellenbogens in dem mittleren Abschnitt ein von der Lichtquellenanordnung aus gesehen unmittelbar hinter den eintrittsseitigen Wabenlinsen vergrabenes Blendenarray aufweisen, dessen Abbildung dann durch die austrittsseitigen Wabenlinsen den eben erwähnten Ellenbogen definiert. Eine blendenfreie Ausgestaltung ist ebenfalls möglich, wonach der Ellenbogen definiert wird, indem Linsenränder, z. B. die unteren Linsenränder, eines oder mehrerer eintrittsseitiger Wabenlinsen durch die entsprechenden austrittsseitigen Wabenlinsen abgebildet werden, nämlich auf eben erwähnten Ellenbogen, um letzteren zu definieren. Dazu werden diese abgebildeten Ränder der Linsenöffnungen der eintrittsseitigen Wabenlinsen entsprechend abweichend von einer ansonsten rechteckigen Grundform der Linsenöffnungen der eintrittsseitigen Wabenlinsen ausgestaltet.

Es ist somit möglich, soeben beschriebenes Abblendlicht nahezu verlustfrei zu gestalten. Insbesondere können Linsenöffnungen der Wabenlinsen vorerwähnter Wabenkondensoren lückenlos aneinandergefügt sein. Die Linsenöffnungen austrittsseitiger Wabenlinsen vorerwähnter Wabenkondensoren können einen äquidistanten Pitch in der ersten Transversalrichtung aufweisen. Selbst in dem Fall der Verwendung des Blendenarrays in dem Wabenkondensor des zweiten Linsenarrays sind die Lichteinbußen relativ gering. In dem Fall der blendenfreien Ausgestaltung ist sogar eine Ausgestaltung der Linsenarrays in Kunststoff, wie z.B. mit Spritzgusstechnologie, möglich.

Bevorzugte Ausführungsbeispiele der vorliegenden Anmeldung werden nachfolgend bezugnehmend auf die Zeichnungen näher erläutert. Es zeigen:
- Fig. 1: eine Raumdarstellung der Komponenten eines Abblendlichts gemäß einem Ausführungsbeispiel der vorliegenden Anmeldung;
- Fig. 2: eine Ausgestaltung der beiden äußeren Linsenarrays des Abblendlichts gemäß einem Ausführungsbeispiel;
- Fig. 3: eine Draufsicht mit zwei Seitenschnittansichten des mittleren Linsenarrays gemäß einem Ausführungsbeispiel;
- Fig. 4: eine Draufsicht und zwei Seitenschnittansichten des mittleren Linsenarrays gemäß einer Variante, bei der im Gegensatz zu Fig. 3 eine blendenfreie Ausgestaltung vorliegt; und
- Fig. 5: eine vereinfachte perspektivische Raumansicht des Abblendlichts und des von ihm erzeugten Lichts mit der einem Abblendlicht entsprechenden Lichtverteilung.

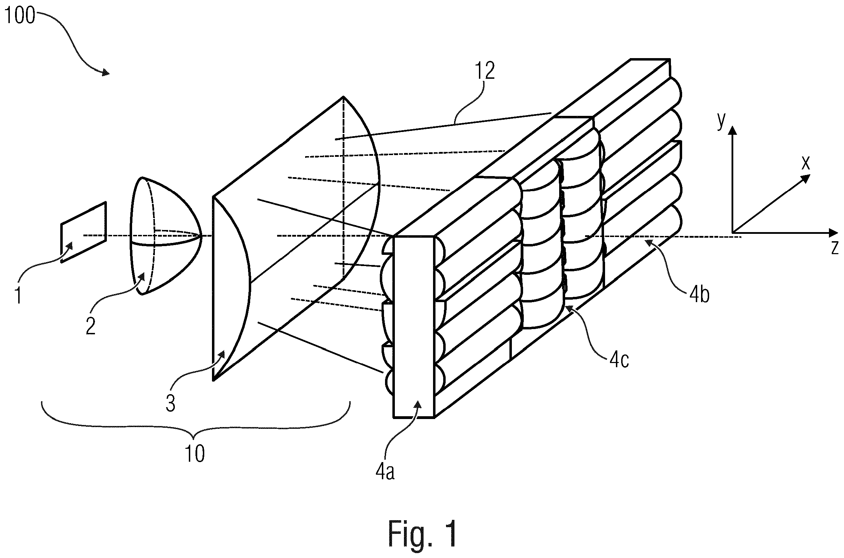

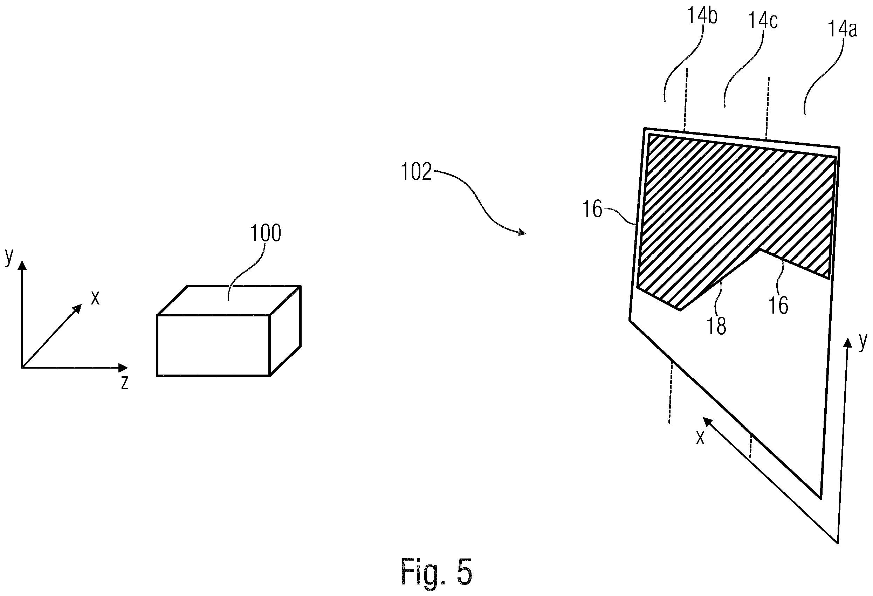

Nachfolgend beschriebene Ausführungsbeispiele folgen einem neuartigen, etendueerhaltenden Ansatz zur Erzeugung kontinuierlicher Lichtstärkeverteilungen mittels irregulärer Wabenkondensoren [2], welcher auf Blenden größtenteils oder sogar gänzlich verzichtet, um ein Abblendlicht mit geringer Baulänge und erhöhter Transmission realisierbar zu machen. In Figur 1 ist ein erstes Ausführungsbeispiel eines Abblendlichtes 100 bzw. eines Abblendlichtscheinwerfers 100 bzw. einer Vorrichtung 100 zur Erzeugung eines Abblendlichtes 102 (vgl. Fig. 5) dargestellt.

Als Lichtquelle dient vorzugsweise eine LED oder ein LED-cluster (1), welcher - entsprechend dem Aspektverhältnis des geforderten Ausgangsbündels - vorzugsweise eine größere Ausdehnung in horizontaler als in vertikaler Richtung aufweist. Die typischerweise Lambert'sche Abstrahlung der LED wird durch eine Sekundäroptik geformt. Dabei erfolgt in vertikaler Richtung eine Kollimation wohingegen die Divergenz in der Horizontale ähnlich der geforderten Horizontalverteilung des Scheinwerfers nur verringert wird. Vorzugsweise besteht diese Sekundäroptik aus einer radialsymmetrischen Asphäre (2) zur Divergenzverringerung und einem nachfolgenden Zylinderlinsenkollimator (3). Falls die LED bzw. der LED-cluster eine Primäroptik (Dom) besitzt und diese bereits eine der Abstrahlungsverteilung ähnlich der geforderten horiziontalen Lichtstärkeverteilung des Scheinwerfers erzeugen, kann auf die Asphäre zur Divergenzverringerung (2) verzichtet werden.

In Fig. 1 bilden somit die Lichtquelle 1, der zylindrische Kollimator 3 und die dazwischen befindliche asphärische Linse 2 eine Lichtquellenanordnung 10 zur Erzeugung eines Lichtkegels 12 aus Licht, das in einer ersten Transversalrichtung y weniger divergent ist als in einer zu der ersten Transversalrichtung y senkrechten zweiten Transversalrichtung x. Bei Verbau des Abblendlichts von Fig. 1 in ein Kraftfahrzeug entspricht die zweite Transversalrichtung x der Horizontalen, wovon im Folgenden weiter ausgegangen werden soll. Es sei aber darauf hingewiesen, dass die Ausgestaltung der Lichtquellenanordnung 10 von Fig. 1 nur exemplarisch ist und auch Alternativen existieren. Beispielsweise könnte anstelle eines Zylinderlinsenkollimators 3 ein azylindrischer Kollimator oder ein toroidaler Kollimator verwendet werden. Insgesamt kann die Lichtquellenanordnung so ausgebildet sein, dass das Licht des Lichtkegels 12 eine Divergenz aufweist, die in der Horizontalen x um mehr als das 10-Fache größer ist als in der Senkrechten y. Die asymmetrische Divergenz wird von den Linsenarrays ausgenutzt, die der Lichtkegel 12 ausleuchtet, wie es im Folgenden beschrieben wird. Dabei kann beispielsweise die Divergenz in horizontale Richtung so sein, dass der Öffnungswinkels des Lichtkegels 12 zwischen 20 und 50 Grad liegt.

Die nachfolgende Mikrooptik zur Strahlformung besteht aus drei horizontal nebeneinander angeordneten Segmenten 4a-c, nämlich Linsenarrays, welche wie in Fig. 5 gezeigt den Bereichen 14a und 14b rechts und links zur Fahrtrichtung sowie dem Bereich 14c in Fahrtrichtung zugeordnet sind bzw. zur Ausleuchtung desselben vorgesehen sind.

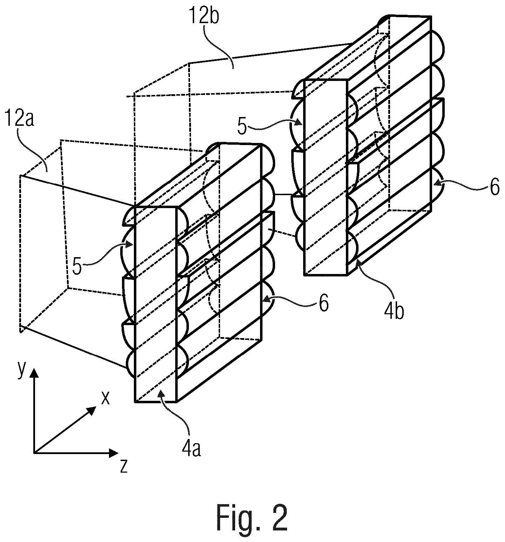

Zur Erzielung der geforderten kontinuierlichen vertikalen Verteilung rechts und links der Fahrtrichtung dienen gemäß vorliegendem Ausführungsbeispiel irreguläre Wabenkondensoren, vorzugsweise Zylinderlinsen-Wabenkondensoren 4a und 4b jeweils mit unterschiedlichen vertikalen Höhen entlang der Achse y der projizierten Hell-Dunkelgrenze 16. Hierzu dienen irreguläre Eingangslenslets bzw. -wabenlinsen 5 mit unterschiedlichen Aperturhöhen bzw. unterschiedlichen großen Linsenöffnungen in y, welche zum Teil aus dezentrierten Zylinderlinsensegmenten bestehen. Die Ausgangslenslets 6 besitzen eine konstante Aperturhöhe, können aber ebenfalls zum Teil aus dezentrierten Linsensegmenten bestehen, wie es in Figur 2 gezeigt ist. Durch kontrollierte Dezentrierung des Ausgangsarrays zum Eingangsarray kann die Höhe der Hell-Dunkelgrenze 16 unterschiedlich für die Bereiche 14a,b links und rechts zur Fahrtrichtung eingestellt werden. Die gewünschte horizontale Lichtstärkeverteilung rechts und links zur Fahrtrichtung wird durch die Strahlformung der Asphäre 2 bzw. die Lichtquellenanordnung 10 erreicht.

In anderen Worten ausgedrückt weist das Abblendlicht 100 ein erstes Linsenarray 4a, ein zweites Linsenarray 4c und ein drittes Linsenarray 4b auf, die entlang der Horizontalen x nebeneinander angeordnet sind, um eingangsseitig jeweils von einem zugeordneten Segment des Lichtkegels 12 durchstrahlt zu werden, in das letzterer entlang der Horizontalen segmentiert ist. Ausgangsseitig geben die Linsenarrays das Abblendlicht wie in Fig. 5 gezeigt mit einer gegenüber dem Lichtkegel 12 veränderten Lichtstärkewinkelverteilung aus. Wie es in Fig. 2 gezeigt wurde, können dabei die beiden äußeren Linsenarrays 4a und 4b als Zylinderlinsenarrays ausgebildet sein, so dass diese das jeweilige Lichtsegment 12a und 12b des Lichtkegels 12, von dem sie durchstrahlt werden, in horizontaler Richtung x unabgelenkt hindurchlassen, was umgekehrt bedeutet, dass der durch die Linsenarrays 4a und 4b ausgeleuchtete Abschnitt bzw. Bereich 14b und 14a des Abblendlichts entlang der horizontalen Achse x einer geradlinigen Verlängerung des jeweiligen Lichtkegelsegments 12a und 12b entspricht, nämlich mit der horizontalen Divergenz des Lichtkegels 12. Insbesondere können die Linsenarrays 4a und 4b als Wabenkondensor mit eintrittsseitigen und austrittsseitigen zylindrischen Wabenlinsen 5 und 6 ausgebildet sein. Die eintrittsseitigen und austrittsseitigen zylindrischen Wabenlinsen, auch als Lenslets bezeichnet, bilden jeweils ein eindimensionales Array in der Richtung y. Die Linsenöffnungen bzw. Aperturen der Wabenlinsen 5 und 6 können rechteckig ausgestaltet und lückenlos aneinandergefügt sein, wie es in Fig. 2 gezeigt ist. Was den gegenseitigen Versatz der Anordnung mit eintrittsseitigen Lenslets bzw. Wabenlinsen 5 gegenüber den austrittsseitigen Lenslets 6 entlang der Richtung y angeht, so ist jener Versatz dazu da, die Lichtstärkewinkelverteilung in dem jeweils zugeordneten Abblendlichtabschnitt 14a und 14b zu bestimmen, nämlich insbesondere die Hell-Dunkel-Grenze 16. Dazu ist dieser gegenseitige Versatz für die beiden Linsenarrays 4a und 4b unterschiedlich gestaltet. Die austrittsseitigen zylindrischen Lenslets 6 können untereinander in y gleich große Linsenöffnungen aufweisen und zueinander wie gezeigt mit einem konstanten Wiederholabstand angeordnet sein. Die austrittsseitigen zylindrischen Wabenlinsen 6 können somit ein regelmäßiges Array bilden. Wie gezeigt können aber einige oder manche der austrittsseitigen zylindrischen Lenslets 6 einen in y dezentrierten Linsenscheitel aufweisen. Vorzugsweise existiert für jedes Linsenarray 4a und 4b eine paarweise Zuordnung zwischen eingangsseitigen Lenslets 5 und ausgangsseitigen Lenslets 6, so dass jedes Eingangslenslet 5 entlang der Richtung y das einfallende Licht des jeweiligen Segmentes 12a und 12b in das zugeordnete Ausgangslenslet 6 bündelt. Die Bündelung eines in y ausgedehnteren Eingangslenslets 5 in ein in y kleineres Ausgangslenslet 6 bewirkt eine Divergenzvergrößerung und in dem umgekehrten Fall wird eine Divergenzverringerung in der y-Richtung erreicht. Die Ausgangslenslets 6 befinden sich in einer Fokalebene der Eingangslenslets 5. Es wird somit eine Köhler'sche Beleuchtung erzielt.

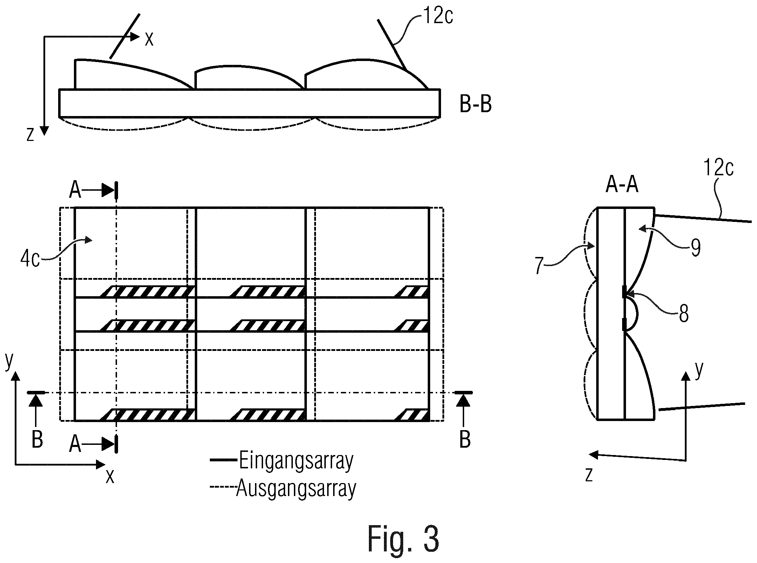

Das zentrale Segment (4c) der Mikrooptik besteht aus einem Tandemarray irregulärer, rechteckiger Lenslets, welches die Maximallichtstärke in Fahrtrichtung und den geneigten Teil der Hell-Dunkelgrenze bzw. Ellenbogen 18 erzeugt, wie es in Figur 3 gezeigt ist.

Eingangsarray und Ausgangsarray haben dabei in horizontaler Richtung jeweils konstante aber unterschiedliche Lensletgröße und -abstand: Die horizontale Richtungen der optischen Achsen der individuellen Arraykanäle entsprechen der horizontalen Einstrahlrichtung der Lichtquelle für den jeweiligen Arraykanal. Der horizontale Abstand bzw. Pitch der Lenslets 7 des Ausgangsarrays ist deshalb größer als der der Lenslets 9 des Eingangsarrays.

In vertikaler Richtung weist das Eingangsarray unterschiedliche Lensletgrößen auf. Die Aperturen der Eingangslenslets können dabei relativ zum entsprechenden Ausgangslenslets dezentriert sein. Um auch in diesem Fall eine Köhlersche Beleuchtung zu ermöglichen, werden die Eingangslenslets dann als dezentrierte Linsensegmente ausgebildet, so dass die Lichtquelle immer in das Zentrum des zugeordneten Ausgangslenslets abgebildet wird. Das Ausgangsarray besitzt rechteckige Lensletaperturen mit konstanter Breite und Höhe. Zur Erzielung der gewünschten Fernfeldverteilung können aber auch hier Lenslets als dezentrierte Linsensegmente ausgebildet werden.

Die Berandung einer unter den Eingangslenslets 9 vergrabenen Blendenstruktur 8 wird als Hell-Dunkelgrenze durch die Ausgangslenslets 7 auf die Straße abgebildet. Diese Funktionsweise entspricht einem nach Unendlich abbildenden Mehrkanalprojektor, wobei für weitere Details auf [3] verwiesen wird.

In anderen Worten ausgedrückt, wird das zweite mittlere Linsenarray 4c als Wabenkondensor mit eintrittsseitigen Lenslets 9 und austrittsseitigen Lenslets 7 ausgestaltet. In der Horizontalen x ist dabei der Inter-Wabenlinsen-Abstand der austrittsseitigen Lenslets 7 größer als für die eintrittsseitigen Lenslets 9, und zwar entsprechend der Divergenz des Lichts des einfallenden Lichtkegels 12 in dieser Richtung x. Der Wabenkondensor, der das mittlere Linsenarray 4c bildet, ist ein zweidimensionaler Wabenkondensor mit einem zweidimensionalen Array aus Wabenlinsen bzw. Lenslets 9 auf der Eintrittsseite und einem entsprechenden zweidimensionalen Array von Wabenlinsen bzw. Lenslets 7 auf der Austrittsseite. Wieder kann eine paarweise bzw. 1-zu-1-Zuordnung zwischen den Lenslets 7 und 9 bestehen: Jedes Paar aus Eingangslenslet 9 und Ausgangslenslet 7 bildet einen Kanal, wobei das Eingangslenslet 9 einfallendes Licht auf das jeweilige Ausgangslenslet bündelt. Es entsteht somit eine Köhlersche Beleuchtung. Das Array von Ausgangslenslets 7 kann regelmäßig in x und y sein, d. h. die austrittsseitigen Lenslets können rechteckige Linsenöffnungen aufweisen, die lückenlos aneinandergefügt sind, um in gleich breiten Spalten und in gleich breiten Zeilen angeordnet zu sein. Die ausgangsseitigen Lenslets 7 könnten zentrierte Linsenscheitel aufweisen, wie es in Fig. 3 gezeigt ist, wobei allerdings auch eine Alternative existiert, wonach selbige dezentrierte Linsenscheitel aufweisen. Die austrittsseitigen Lenslets 7 befinden sich im Fokalabstand zu den eintrittsseitigen Lenslets 9 und umgekehrt gilt das Gleiche, d. h. die eintrittsseitigen Lenslets 9 befinden sich in der Fokalebene der austrittsseitigen Lenslets 7. In dieser Ebene befinden sich auch die Blendenabschnitte des Blendenarrays 8. Blendenkanten werden durch die austrittsseitigen Lenslets 7 nach unendlich abgebildet, um dort den Ellenbogen 16 zu definieren.

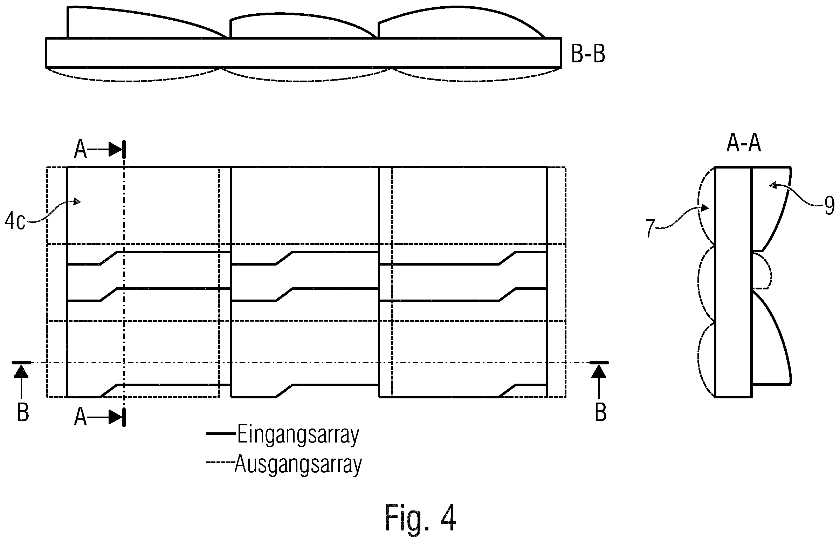

Eine alternative Realisierung des zentralen Segments ist auch ohne vergrabene Blenden mit irregulären Eingangslenslets 9, deren Kontur der Geometrie des Ellenbogens - bzw. den Blendenstrukturen aus Figur 3 - entspricht, möglich. Figur 4 zeigt eine entsprechende Realisierung.

In anderen Worten ausgedrückt, zeigt Fig. 4 eine Alternative, wonach es möglich ist, auf die Blenden 8 zu verzichten. Der Ellenbogen 18 wird hier dadurch realisiert, dass die Linsenöffnungen der eintrittsseitigen Lenslets nicht-rechteckig ausgestaltet werden. Insbesondere werden die unteren Kanten der Linsenöffnungen der eintrittsseitigen Lenslets 9 so gebildet, dass sie bei Abbildung dieser Linsenunterkanten durch die entsprechenden austrittsseitigen Lenslets 7 ins Unendliche den Ellenbogen 18 definieren. Die Abwesenheit einer Blende ermöglicht es, nicht nur die Lichtausbeute zu maximieren, sondern auch durch den verringerten Wärmeeintrag des Linsenarray 4c aus einem weniger hitzebeständigen Material herzustellen wie z. B. aus Kunststoff.

Das beschriebene Leuchtensystem kann einzeln oder bestehend aus mehreren Teilmodulen zur Erzielung der geforderten Lichtstärke in einen Autoscheinwerfer integriert werden.

Durch die mikrooptische Realisierung als Multiapertursystem zur Strahlformung ist eine drastische Verringerung der Baulänge verglichen mit herkömmlichen Systemen möglich. Durch die nur im zentralen Bereich vorhandenen Blenden, welche außerdem nur eine minimale Fläche einnehmen, ermöglicht das vorgeschlagene Design eine gegenüber [1] vergrößerte Transmission und verringerte thermische Belastung des Blendenarrays.

Das gezeigte Abblendlicht ist als Kfz-Abblendlicht einsetzbar oder aber zur Erzeugung beliebiger Fernfeldverteilungen bei Scheinwerfern.

Obige Ausführungsbeispiele umfassen somit insbesondere ein Abblendlicht mit z.B: verringerter Baulänge in z bzw. längs der Strahlrichtung bestehend aus einer strahlgeformten Lichtquelle und einer nachfolgenden aus drei horizontal nebeneinander angeordneten irregulären Mikrolinsenarrays bestehenden Strahlformungsoptik, welche jeweils einen Bereich rechts, links bzw. in Fahrtrichtung ausleuchten. Eine Ausführung als Tandem-Array ist möglich. Die Strahlformung der Lichtquelle kann eine Kollimation in vertikaler Richtung umfassen. Die Strahlformung der Lichtquelle kann eine Divergenzverringerung in horizontaler und eine Kollimation in vertikaler Richtung durch eine Asphäre und einen nachfolgenden Zylinderlinsenkollimator umfassen. Die Strahlformung kann insbesondere wie gezeigt durch eine Asphäre und einen azylindrischen Kollimator realisiert werden. Eine

Strahlformung durch eine Asphäre und einen toroidalen Kollimator wäre aber ebenfalls möglich. Die beiden äußeren Linsenarrays können als irreguläre Zylinderlinsenarrays ausgebildet sein. Eine identische Ausbildung der Lenslets der beiden äußeren Linsenarrays mit aber unterschiedlicher vertikaler Dezentrierung der Ausgangsarrays zu den Eingangsarrays ist möglich. Die beiden äußeren Linsenarrays können zudem als irreguläre Linsenarrays mit rechteckigen Lenslets ausgebildet sein, wobei der horizontale Abstand der Lenslets des Ausgangsarrays größer ist als der Abstand der Lenslets des Eingangsarrays. Eine Ausbildung des zentralen Linsenarrays als irreguläres Array rechteckiger Lenslets ist möglich, wobei der horizontale Abstand der Lenslets des Ausgangsarrays erfindungsgemäß größer ist als der des Eingangsarrays. Dabei kann ein unter dem Eingangsarray vergrabenes Blendenarray durch dessen Abbildung mittels der Ausgangsarrays den zentralen Bereich der Hell-Dunkelgrenze erzeugen. Mittels geeignet konturierten Eingangslenslets und Abbildung dieser Lensletkonturen kann der zentrale Bereich der Helldunkelgrenze auch blendenfrei erzeugt werden. Die Linsenarrays können als Tandem-arrays erzeugt werden. Eine Realisierung der drei Tandemarrays als monolithisches Element auf einem gemeinsamen Substrat ist möglich.

### Literatur

[1] F. Bauer, G. Böhm, "Mikroprojektions-Lichtmodul für einen Kraftfahrzeugscheinwerfer", AT 514967 B1.
[2] C. Li, P. Schreiber, D. Michaelis, Ch. Wächter, St. Fischer, U. D. Zeitner: "Etendue conserving light shaping using microlens arrays with irregular lenslets", SPIE 10693 (2018) 1069304.
[3] P. Schreiber, M. Sieler, E. Förster, "Projektionsdisplay und dessen Verwendung", DE 10 2009 024 894 A1.

## Patentansprüche

1. Abblendlichtscheinwerfer mit
einer Lichtquellenanordnung (10) zur Erzeugung eines Lichtkegels (12) aus Licht, das in einer ersten Transversalrichtung (y) weniger divergent ist als in einer zu der ersten Transversalrichtung senkrechten zweiten Transversalrichtung (x);
einem ersten, zweiten und dritten Linsenarray (4a, 4b, 4c), die entlang der zweiten Transversalrichtung (x) nebeneinander angeordnet sind, um eingangsseitig jeweils von einem zugeordneten Segment von in der zweiten Transversalrichtung nebeneinander angeordneten Segmenten (12a, 12b, 12c) des Lichtkegels (12) durchstrahlt zu werden und ausgangsseitig Abblendlicht (102) mit einer gegenüber dem Lichtkegel (12) veränderten Lichtstärkewinkelverteilung auszugeben,
wobei das zweite Linsenarray (4c) zwischen dem ersten und dritten Linsenarray (4a, 4b) angeordnet ist und als Wabenkondensor mit eintrittsseitigen und austrittsseitigen Wabenlinsen (7, 9) ausgebildet ist, wobei ein Inter-Wabenlinsen-Abstand des zweiten Linsenarrays (4c) in der zweiten Transversalrichtung für die austrittsseitigen Wabenlinsen (7) größer als für die eingangsseitigen Wabenlinsen (9) ist.

2. Abblendlichtscheinwerfer gemäß Anspruch 1 zum Verbau in ein Kraftfahrzeug, so dass die zweite Transversalrichtung (x) einer Horizontalen entspricht.

3. Abblendlichtscheinwerfer gemäß Anspruch 1 oder 2, wobei die Lichtquellenanordnung (10) eine in die erste und zweite Transversalrichtung (y, x) divergent abstrahlende Lichtquelle (1) und einen Kollimator (3) zum Kollimieren divergenten Lichts von der Lichtquelle (1) mit einem in der ersten Transversalrichtung (y) gegenüber der zweiten Transversalrichtung (x) erhöhten Kollimationsgrad aufweist.

4. Abblendlichtscheinwerfer gemäß Anspruch 3, bei dem die Lichtquellenanordnung (10) eine asphärische Linse (2) zwischen Lichtquelle (1) und Kollimator (3) zur Vorkollimation aufweist.

5. Abblendlichtscheinwerfer gemäß Anspruch 3 oder 4, bei dem der Kollimator (3) einen Zylinderlinsenkollimator oder einen azylindrischen Kollimator oder einen toroidalen Kollimator aufweist.

6. Abblendlichtscheinwerfer gemäß einem der Ansprüche 1 bis 5, bei dem die Lichtquellenanordnung (10) so ausgebildet ist, dass das Licht des Lichtkegels (12) eine Divergenz aufweist, die in der zweiten Transversalrichtung (x) um mehr als das 10-fache größer ist als in der ersten Transversalrichtung (y).

7. Abblendlichtscheinwerfer gemäß einem der vorhergehenden Ansprüche, bei dem das zweite Linsenarray (4c) zwischen dem ersten und dritten Linsenarray (4a, 4b) angeordnet ist, und das erste und das dritte Linsenarray (4a, 4b) als Zylinderlinsenarrays ausgebildet sind, so dass für jedes des ersten und dritten Linsenarrays (4a, 4b) das Segment (12a, 12b, 12c) des Lichtkegels (12), das das jeweilige Linsenarray (4a, 4b) durchstrahlt, ausgangsseitig einen Abschnitt (14a, 14b) des Abblendlichts (102) ausleuchtet, der entlang der zweiten Transversalrichtung (x) einer geradlinigen Verlängerung des jeweiligen Segments (12a, 12b) entspricht.

8. Abblendlichtscheinwerfer gemäß einem der vorhergehenden Ansprüche, bei dem das zweite Linsenarray (4c) zwischen dem ersten und dritten Linsenarray (4a, 4b) angeordnet ist, und jedes des ersten und dritten Linsenarrays (4a, 4b) als Wabenkondensor mit eintrittsseitigen und austrittsseitigen zylindrischen Wabenlinsen (5, 6) ausgebildet ist.

9. Abblendlichtscheinwerfer gemäß einem der vorhergehenden Ansprüche, bei dem das zweite Linsenarray (4c) zwischen dem ersten und dritten Linsenarray (4a, 4b) angeordnet ist, und jedes des ersten und dritten Linsenarrays (4a, 4b) als Wabenkondensor mit einem ersten eindimensionalen, sich entlang der ersten Transversalrichtung erstreckenden Array von eintrittsseitigen zylindrischen Wabenlinsen (5) und einem zweiten eindimensionalen, sich entlang der ersten Transversalrichtung erstreckenden Array von austrittsseitigen zylindrischen Wabenlinsen ausgebildet ist.

10. Abblendlichtscheinwerfer gemäß Anspruch 9, bei dem ein gegenseitiger Versatz einer Anordnung der eintrittsseitigen zylindrischen Wabenlinsen (5) gegenüber den austrittsseitigen zylindrischen Wabenlinsen (6) in der ersten Transversalrichtung (y) für das erste und das dritte Linsenarray (4a, 4b) hinsichtlich Linsenöffnung und/oder Linsenscheitel unterschiedlich ist, so dass eine Änderung der Lichtstärkewinkelverteilung des das erste Linsenarray (4a) durchstrahlenden Segments (12a) des Lichtkegels (12) in der ersten Transversalrichtung (y) gegenüber einer Änderung der Lichtstärkewinkelverteilung des das dritte Linsenarray (4b) durchstrahlenden Segments (12b) des Lichtkegels (12) in der ersten Transversalrichtung (y) unterschiedlich ist.

11. Abblendlichtscheinwerfer gemäß Anspruch 10, bei dem für das erste und das dritte Linsenarray (4a, 4b) die austrittsseitigen zylindrischen Wabenlinsen (6) untereinander in der ersten Transversalrichtung (y) gleich große Linsenöffnungen aufweisen und zueinander mit einem konstanten Wiederholabstand angeordnet sind.

12. Abblendlichtscheinwerfer gemäß einem der vorhergehenden Ansprüche, bei dem der Wabenkondensor des zweiten Linsenarrays (4c) ein von der Lichtquellenanordnung aus gesehen hinter den eintrittsseitigen Wabenlinsen (9) vergrabenes Blendenarray (8) aufweist, dessen Abbildung durch die austrittsseitigen Wabenlinsen (7) eine Hell-Dunkel-Kante (18) in einem zentralen Abschnitt (14c) des Abblendlichts (102) erzeugt.

13. Abblendlichtscheinwerfer gemäß einem der Ansprüche 1 bis 11, bei dem der Wabenkondensor des zweiten Linsenarrays (4c) blendenfrei gestaltet ist.

14. Abblendlichtscheinwerfer gemäß Anspruch 13 bei dem der Wabenkondensor des zweiten Linsenarrays (4c) blendenfrei gestaltet ist und so, dass eine Abbildung von Linsenrändern der eintrittsseitigen Wabenlinsen (9) durch die austrittseitigen Wabenlinsen (7) in einem zentralen Abschnitt (14c) des Abblendlichtes (102) eine Hell-Dunkel-Kante (18) erzeugen.

15. Abblendlichtscheinwerfer gemäß einem der Ansprüche 1 bis 14, wobei
die Lichtstärkewinkelverteilung des Abblendlichts (102) in einem ersten Abschnitt (14a), der von dem das erste Linsenarray (4a) durchstrahlenden Segment (12a) des Lichtkegels (12) ausgeleuchtet wird, in der ersten Transversalrichtung (y) durch das erste Linsenarray (4a) eine in der zweiten Transversalrichtung (x) verlaufende erste Hell-Dunkel-Kante (16) aufweist,
die Lichtstärkewinkelverteilung des Abblendlichts (102) in einem zweiten Abschnitt (14b), der von dem das dritte Linsenarray (4b) durchstrahlenden Segment (12b) des Lichtkegels (12) ausgeleuchtet wird, in der ersten Transversalrichtung (y) durch das dritte Linsenarray eine in der zweiten Transversalrichtung verlaufende dritte Hell-Dunkel-Kante (16) mit einer in der ersten Transversalrichtung (y) anderen Lage als der der ersten Hell-Dunkel-Kante (16) aufweist,
die Lichtstärkewinkelverteilung des Abblendlichts (102) in einem dritten Abschnitt (14c), der von dem das zweite Linsenarray (4c) durchstrahlenden Segment (12c) des Lichtkegels (12) ausgeleuchtet wird, in der ersten Transversalrichtung (y) durch das zweite Linsenarray (4c) eine bezüglich der ersten und zweiten Transversalrichtung (x, y) schräg verlaufende zweite Hell-Dunkel-Kante (18) aufweist, die von der ersten zu der dritten Hell-Dunkel-Kante verläuft.

16. Abblendlichtscheinwerfer gemäß einem der vorhergehenden Ansprüche, bei dem das erste, zweite und dritte Linsenarray monolithisch auf einem gemeinsamen Substrat gebildet sind.

17. Kraftfahrzeug mit einem Abblendlichtscheinwerfer gemäß einem der vorhergehenden Ansprüche.

## Claims

1. Low beam headlights comprising
a light source arrangement (10) for generating a light cone (12) of light that is less divergent in a first transverse direction (y) than in a second transverse direction (x) perpendicular to the first transverse direction;
first, second and third lens arrays (4a, 4b, 4c) that are arranged next to one another along the second transverse direction (x) in order to be irradiated on the input side by an associated segment of segments (12a, 12b, 12c) of the light cone (12) arranged next to one another in the second transverse direction and to output low beam (102) with a luminous intensity angle distribution modified with respect to the light cone (12) on the output side,
wherein the second lens array (4c) is arranged between the first and third lens arrays (4a, 4b) and is configured as honeycomb condenser with entry-side and exit-side honeycomb lenses (7, 9), wherein an inter-honeycomb lens distance of the second lens array (4c) in the second transverse direction is larger for the exit-side honeycomb lenses (7) than for the entry-side honeycomb lenses (9).

2. Low beam headlights according to claim 1 for installation in a motor vehicle so that the second transverse direction (x) corresponds to a horizontal.

3. Low beam headlights according to claim 1 or 2, wherein the light source arrangement (10) comprises a light source (1) radiating divergently in the first and second transverse directions (y, x) and a collimator (3) for collimating divergent light from the light source (1) with a degree of collimation increased in the first transverse direction (y) relative to the second transverse direction (x).

4. Low beam headlights according to claim 3, wherein the light source arrangement (10) comprises an aspherical lens (2) between light source (1) and collimator (3) for pre-collimation.

5. Low beam headlights according to claim 3 or 4, wherein the collimator (3) comprises a cylindrical lens collimator or an acylindrical collimator or a toroidal collimator.

6. Low beam headlights according to any one of claims 1 to 5, wherein the light source arrangement (10) is configured such that the light of the light cone (12) comprises a divergence which is greater by more than 10 times in the second transverse direction (x) than in the first transverse direction (y).

7. Low beam headlights according to any one of the preceding claims, wherein the second lens array (4c) is arranged between the first and third lens arrays (4a, 4b), and the first and third lens arrays (4a, 4b) are configured as cylindrical lens arrays, so that for each of the first and third lens arrays (4a, 4b), the segment (12a, 12b) of the light cone (12) irradiating the respective lens array (4a, 4b) illuminates, on the output side, a section (14a, 14b) of the low beam (102) that corresponds to a rectilinear extension of the respective segment (12a, 12b) along the second transverse direction (x).

8. Low beam headlights according to any one of the preceding claims, wherein the second lens array (4c) is arranged between the first and third lens arrays (4a, 4b), and each of the first and third lens arrays (4a, 4b) is configured as a honeycomb condenser having entry-side and exit-side cylindrical honeycomb lenses (5, 6).

9. Low beam headlights according to any one of the preceding claims, wherein the second lens array (4c) is arranged between the first and third lens arrays (4a, 4b), and each of the first and third lens arrays (4a, 4b) is configured as a honeycomb condenser comprising a first one-dimensional array of input-side cylindrical honeycomb lenses (5) extending along the first transverse direction and a second one-dimensional array of exit-side cylindrical honeycomb lenses extending along the first transverse direction.

10. Low beam headlights according to claim 9, wherein a mutual offset of an arrangement of the entry-side cylindrical honeycomb lenses (5) with respect to the exit-side cylindrical honeycomb lenses (6) in the first transverse direction (y) is different for the first and third lens arrays (4a, 4b) with respect to lens aperture and/or lens vertex, so that a change of luminous intensity angle distribution of the segment (12a) of the light cone (12) irradiating the first lens array (4a) in the first transverse direction (y) is different from a change of luminous intensity angle distribution of the segment (12b) of the light cone (12) irradiating the third lens array (4b) in the first transverse direction (y).

11. Low beam headlights according to claim 10, wherein for the first and third lens arrays (4a, 4b) the exit-side cylindrical honeycomb lenses (6) have lens apertures of equal size with respect to each other in the first transverse direction (y) and are arranged with a constant repetition distance to each other.

12. Low beam headlights according to any one of the preceding claims, wherein the honeycomb condenser of the second lens array (4c) comprises an aperture array (8) buried behind the entry-side honeycomb lenses (9) as viewed from the light source arrangement, the mapping of which by the exit-side honeycomb lenses (7) creates a light/dark edge (18) in a central portion (14c) of the low beam (102).

13. Low beam headlights according to any one of claims 1 to 11, wherein the honeycomb condenser of the second lens array (4c) is configured without apertures.

14. Low beam headlights according to claim 13, wherein the honeycomb condenser of the second lens array (4c) is configured without apertures and such that mapping of lens edges of the entry-side honeycomb lenses (9) by the exit-side honeycomb lenses (7) generate a light/dark edge (18) in a central portion (14c) of the low beam (102).

15. Low beam headlights according to any one of claims 1 to 14, wherein
the luminous intensity angle distribution of the low beam (102) in a first portion (14a) illuminated by the segment (12a) of the light cone (12) irradiating the first lens array (4a) comprises, in the first transverse direction (y) through the first lens array (4a), a first light/dark edge (16) extending in the second transverse direction (x),
the luminous intensity angle distribution of the low beam (102) in a second portion (14b) illuminated by the segment (12b) of the light cone (12) irradiating the third lens array (4b) comprises, in the first transverse direction (y) through the third lens array, a third light/dark edge (16) extending in the second transverse direction with a different position in the first transverse direction (y) than the first light/dark edge (16),
the luminous intensity angle distribution of the low beam (102) in a third section (14c) illuminated by the segment (12c) of the light cone (12) irradiating the second lens array (4c) comprises, in the first transverse direction (y) through the second lens array (4c), a second light/dark edge (18) extending obliquely with respect to the first and second transverse directions (x, y) and running from the first to the third light/dark edge.

16. Low beam headlights according to any one of the preceding claims, wherein the first, second and third lens arrays are monolithically formed on a common substrate.

17. Motor vehicle having low beam headlights according to any one of the preceding claims.

## Revendications

1. Phare à feu de croisement, avec
un aménagement de sources de lumière (10) destiné à générer un cône de lumière (12) à partir de lumière qui est moins divergente dans une première direction transversale (y) que dans une deuxième direction transversale (x) perpendiculaire à la première direction transversale;
un premier, un deuxième et un troisième réseau de lentilles (4a, 4b, 4c) qui sont disposés l'un à côté de l'autre dans la deuxième direction transversale (x) pour être traversés, chacun, du côté de l'entrée par un segment associé parmi les segments (12a, 12b, 12c) du cône de lumière (12) disposés l'un à côté de l'autre dans la deuxième direction transversale et pour émettre, du côté de la sortie, du feu de croisement (102) avec une distribution angulaire de l'intensité lumineuse modifiée par rapport au cône de lumière (12),
dans lequel le deuxième réseau de lentilles (4c) est disposé entre le premier et le troisième réseau de lentilles (4a, 4b) et est conçu comme un condenseur en nid d'abeilles avec des lentilles en nid d'abeilles du côté de l'entrée et du côté de la sortie (7, 9), dans lequel une distance entre lentilles en nid d'abeilles du deuxième réseau de lentilles (4c) dans la deuxième direction transversale est plus grande pour les lentilles en nid d'abeilles du côté de la sortie (7) que pour les lentilles en nid d'abeilles du côté de l'entrée (9).

2. Phare à feu de croisement selon la revendication 1 destiné à être installé dans un véhicule automobile, de sorte que la deuxième direction transversale (x) corresponde à une ligne horizontale.

3. Phare à feu de croisement selon la revendication 1 ou 2, dans lequel l'aménagement de sources de lumière (10) présente une source de lumière (1) rayonnant de manière divergente dans la première et la deuxième direction transversale (y, x) et un collimateur (3) destiné à collimater la lumière divergente de la source de lumière (1) avec un degré de collimation accru dans la première direction transversale (y) par rapport à la deuxième direction transversale (x).

4. Phare à feu de croisement selon la revendication 3, dans lequel l'aménagement de sources de lumière (10) présente une lentille asphérique (2) entre la source de lumière (1) et le collimateur (3) destinée à une pré-collimation.

5. Phare à feu de croisement selon la revendication 3 ou 4, dans lequel le collimateur (3) présente un collimateur à lentille cylindrique ou un collimateur non cylindrique ou un collimateur toroïdal.

6. Phare à feu de croisement selon l'une des revendications 1 à 5, dans lequel l'aménagement de sources de lumière (10) est conçu de sorte que la lumière du cône de lumière (12) présente une divergence qui, dans la deuxième direction transversale (x), est de plus de 10 fois supérieure que dans la première direction transversale (y).

7. Phare à feu de croisement selon l'une des revendications précédentes, dans lequel le deuxième réseau de lentilles (4c) est disposé entre le premier et le troisième réseau de lentilles (4a, 4b), et le premier et le troisième réseau de lentilles (4a, 4b) sont conçus comme réseaux de lentilles cylindriques, de sorte que, pour chacun du premier et du troisième réseau de lentilles (4a, 4b), le segment (12a, 12b, 12c) du cône de lumière (12) qui traverse le réseau de lentilles (4a, 4b) respectif illumine, du côté de la sortie, un segment (14a, 14b) du feu de croisement (102) qui correspond, dans la deuxième direction transversale (x), à un prolongement rectiligne du segment respectif (12a, 12b).

8. Phare à feu de croisement selon l'une des revendications précédentes, dans lequel le deuxième réseau de lentilles (4c) est disposé entre le premier et le troisième réseau de lentilles (4a, 4b), et chacun du premier et du troisième réseau de lentilles (4a, 4b) est conçu comme condenseur en nid d'abeille avec des lentilles en nid d'abeille cylindriques du côté de l'entrée et du côté de la sortie (5, 6).

9. Phare à feu de croisement selon l'une des revendications précédentes, dans lequel le deuxième réseau de lentilles (4c) est disposé entre le premier et le troisième réseau de lentilles (4a, 4b), et chacun du premier et du troisième réseau de lentilles (4a, 4b) est conçu comme condenseur en nid d'abeilles avec un premier réseau unidimensionnel de lentilles en nid d'abeille cylindriques du côté de l'entrée (5) s'étendant dans la première direction transversale et un deuxième réseau unidimensionnel de lentilles en nid d'abeille cylindriques du côté de la sortie s'étendant dans la première direction transversale.

10. Phare à feu de croisement selon la revendication 9, dans lequel un décalage réciproque d'un aménagement des lentilles en nid d'abeilles cylindriques du côté de l'entrée (5) par rapport aux lentilles en nid d'abeilles cylindriques du côté de la sortie (6) dans la première direction transversale (y) est différent pour le premier et le troisième réseau de lentilles (4a, 4b) en ce qui concerne l'ouverture de lentille et/ou le sommet de lentille, de sorte qu'un changement de la distribution angulaire de l'intensité lumineuse du segment (12a) du cône de lumière (12) traversant le premier réseau de lentilles (4a) dans la première direction transversale (y) soit différent par rapport à un changement de la distribution angulaire de l'intensité lumineuse du segment (12b) du cône de lumière (12) traversant le troisième réseau de lentilles (4b) dans la première direction transversale (y).

11. Phare à feu de croisement selon la revendication 10, dans lequel, pour le premier et le troisième réseau de lentilles (4a, 4b), les lentilles en nid d'abeille cylindriques du côté de la sortie (6) présentent des ouvertures de lentille de même grandeur entre elles dans la première direction transversale (y) et sont disposées l'une par rapport à l'autre à une distance de répétition constante.

12. Phare à feu de croisement selon l'une des revendications précédentes, dans lequel le condenseur en nid d'abeilles du deuxième réseau de lentilles (4c) présente un réseau de diaphragmes (8) enterré, vu de l'aménagement de sources de lumière, derrière les lentilles en nid d'abeille du côté de l'entrée (9), dont la reproduction génère, par les lentilles en nid d'abeille du côté de la sortie (7), un bord clair-obscur (18) dans un segment central (14c) du feu de croisement (102).

13. Phare à feu de croisement selon l'une des revendications 1 à 11, dans lequel le condenseur en nid d'abeille du deuxième réseau de lentilles (4c) est conçu sans éblouissement.

14. Phare à feu de croisement selon la revendication 13, dans lequel le condenseur en nid d'abeilles du deuxième réseau de lentilles (4c) est réalisé sans éblouissement et de sorte qu'une reproduction des bords des lentilles en nid d'abeilles (9) du côté de l'entrée génère, par les lentilles en nid d'abeilles (7) du côté de la sortie dans un segment central (14c) du feu de croisement (102), un bord clair-obscur (18).

15. Phare à feu de croisement selon l'une des revendications 1 à 14, dans lequel
la distribution angulaire de l'intensité lumineuse du feu de croisement (102) dans un premier segment (14a) qui est éclairé par le segment (12a) du cône de lumière (12) traversant le premier réseau de lentilles (4a) présente, dans la première direction transversale (y) à travers le premier réseau de lentilles (4a), un premier bord clair-obscur (16) s'étendant dans la deuxième direction transversale (x),
la distribution angulaire de l'intensité lumineuse du feu de croisement (102) dans un deuxième segment (14b) qui est éclairé par le segment (12b) du cône de lumière (12) traversant le troisième réseau de lentilles (4b) présente, dans la première direction transversale (y) à travers le troisième réseau de lentilles, un troisième bord clair-obscur (16) s'étendant dans la deuxième direction transversale avec une position différente dans la première direction transversale (y) de celle du premier bord clair-obscur (16),
la distribution angulaire de l'intensité lumineuse du feu de croisement (102) dans un troisième segment (14c) qui est éclairé par le segment (12c) du cône de lumière (12) traversant le deuxième réseau de lentilles (4c) présente, dans la première direction transversale (y) à travers le deuxième réseau de lentilles (4c), un deuxième bord clair-obscur (18) s'étendant obliquement par rapport à la première et la deuxième direction transversale (x, y) qui s'étend du premier au troisième bord clair-obscur.

16. Phare à feu de croisement selon l'une des revendications précédentes, dans lequel le premier, le deuxième et le troisième réseau de lentilles sont formés de manière monolithique sur un substrat commun.

17. Véhicule automobile avec un phare à feu de croisement selon l'une des revendications précédentes.
